# DEMANDE DE BREVET EUROPEEN

(11) **EP 0 965 744 A1**
(43) Date de publication de la demande: **22.12.1999**
(21) Numéro de dépôt: 99401489.2
(22) Date de dépôt: 17.06.1999
(51) Int. Cl.: F02K 1/70

(54) **Inverseur de poussée de turboreacteur à portes formant écopes à section d'echappement adaptable**

(30) Priorité: 18.06.1998 FR 9807659
(71) Demandeur: Hispano-Suiza Aérostructures, 76700 Gonfreville l'Orcher (FR)
(72) Inventeur: Gonidec, Patrick, 76290 Montivilliers (FR); Portal, Jean-Fabrice Marcel, 76310 Ste. Adresse (FR); Studer, Vincent Joseph Rodolphe, 76600 Le Harve (FR); Vauchel, Guy Bernard, 76610 Le Havre (FR)
(74) Mandataire: Berrou, Paul

(57) **Abrégé**

Un inverseur de poussée de turboréacteur à double flux comporte des portes creuses pivotantes (3) ayant un conduit interne (10) de guidage du flux au travers de la porte (3) en jet inversé, entre une structure externe (4) et une structure interne (5), de porte. Au moins une partie aval de la structure externe (4) est indépendante et mobile par rapport à la structure interne (5) de la porte (3) et elle est entraînée dans une direction centrifuge par rapport à la structure interne au moyen d'un système d'entraînement mécanique de manière que la section aval S2 de sortie, inférieure en jet direct, soit au moins égale à la section d'entrée S1 en jet inversé.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La demande de brevet français 96.09705 décrit un exemple de réalisation, illustré par la figure 1 des dessins joints, d'un inverseur de poussée à portes formant écopes, associé à un turboréacteur à double flux.

Le dispositif d'inversion est constitué d'un ensemble mobile et d'une structure fixe. L'ensemble mobile est constitué de portes creuses 3 formant une partie mobile 2 et constituant en position jet direct, une partie du capotage extérieur de la nacelle. La structure fixe est constituée d'une partie amont 6 en amont des portes, d'une partie aval 7 en aval des portes 3 et de poutres qui relient la partie amont 6 à la partie aval 7, la structure fixe réalisant elle aussi une partie du capotage extérieur.

Les portes 3 sont montées sur une circonférence du capotage extérieur et sont montées pivotantes dans une zone aval de leurs parois latérales sur les poutres reliant la partie aval 7 à la partie amont 6 du capotage extérieur situées de part et d'autre de ces portes, ces parois latérales relient la partie extérieure ou panneau externe 4 des portes 3, qui constitue une partie de la paroi extérieure de la nacelle à la partie intérieure 5 des portes 3 qui constitue une partie de la paroi extérieure du conduit.

La partie amont 6 de structure fixe comporte un cadre avant 8 qui peut servir de support aux moyens de commande des déplacements des portes 3, constitués par exemple par des vérins. Ces moyens de commande de déplacements des portes 3 peuvent de même être situés à d'autres endroits en périphérie de la porte 3 par exemple en aval de celle-ci. Dans ce cas c'est la structure aval 7 de structure fixe qui peut supporter les organes de commande.

En position activée, les portes 3 basculent de telle façon que la partie des portes situées en amont des pivots 9 vient obstruer plus ou moins totalement le conduit tout en dégageant un passage dans le capotage extérieur de manière à permettre au flux secondaire respectivement 13 et 14 d'être canalisé dans une direction centrifuge par rapport à l'axe du conduit d'une part dans le conduit ou tuyère 10 formé par la structure de la porte 3 et entre le bord de déviation et l'externe de la structure externe 4 de la porte 3 d'autre part. La partie aval des portes vient au voisinage de l'externe du capotage extérieur. L'angle de pivotement des portes est ajusté de manière à permettre le passage du flux et de manière à réduire fortement voire à supprimer la poussée de ce flux, et à générer une contre poussée en produisant une composante du flux dévié vers l'amont.

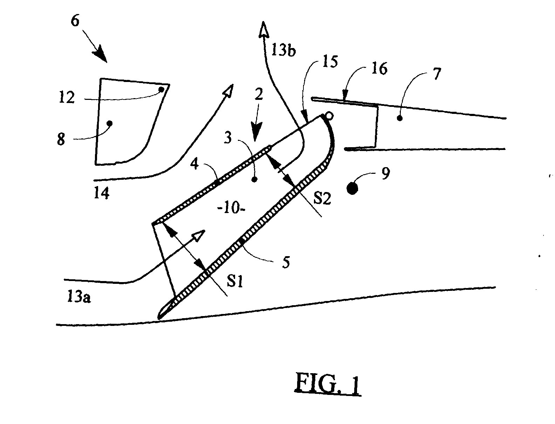

La définition géométrique des lignes de nacelle comprenant l'inverseur de poussée doit être adaptée aux conditions aérodynamiques de performances optimales pour le vol, ce qui entraîne couramment un rétrécissement des lignes de la structure externe de l'inverseur dans la direction aval de la nacelle. Comme le montre la figure 1, la porte écope 3 dont l'amont pivote dans une direction centripète par rapport à l'axe géométrique de la nacelle se retrouve donc avec une section efficace d'échappement représentée en S2 plus petite que la section d'entrée représentée en S1. Il en résulte une diminution des performances en mode de jet inversé par une réduction de l'action du flux 13b sortant du conduit interne 10 de la porte 3 sur le flux 14 passant entre le bord de déviation 8 et l'externe de la structure externe 4 de la porte. Un des buts de l'invention est d'obtenir un accroissement des performances aérodynamiques des portes écopes, lors du fonctionnement en inversion de poussée de l'inverseur, tout en respectant les conditions notées ci-dessus.

Les buts sont atteints conformément à l'invention par un inverseur de poussée de turboréacteur à portes formant écopes du type précité caractérisé en ce que
au moins une partie aval de la structure externe de la porte, qui forme ledit conduit interne de guidage du flux au travers de la porte, est indépendante et mobile par rapport à la structure interne de la porte, de manière que la section aval S2 de sortie efficace d'échappement du conduit interne de porte soit, d'une part, en position de jet direct, inférieure à la section amont S1 d'entrée du conduit interne de porte, correspondant au resserrement des lignes externes de nacelle vers l'aval et, d'autre part, en position de jet inversé après augmentation, au moins égale à la section d'entrée S1, ladite partie mobile de structure externe de porte étant entraînée dans une direction centrifuge par rapport à la structure interne de porte au moyen d'un système d'entraînement mécanique.

D'autres caractéristiques et avantages de l'invention seront mieux compris à la lecture de la description qui va suivre des modes de réalisation de l'invention, en référence aux dessins annexés sur lesquels :
- La figure 1 représente une demi-vue schématique, en coupe longitudinale par un plan passant par l'axe de rotation d'un turboréacteur associé, d'un inverseur de poussée à portes écopes pivotantes, en position ouverte, d'un type connu et qui a fait précédemment l'objet d'une description.
- La figure 2 représente, dans une vue analogue à celle de la figure 1, en position fermée, un inverseur de poussée à portes écopes selon un mode de réalisation de l'invention.
- La figure 3 représente le mode de réalisation décrit suivant la figure 2, en mode jet inversé;
- La figure 4 représente, dans une vue analogue à celle de la figure 1, en position fermée, un inverseur de poussée à portes écopes selon un mode de réalisation de l'invention ;.
- La figure 5 représente le mode de réalisation décrit suivant la figure 4, en mode jet inversé ;
- Les figures 6 et 7 représentent en perspective le concept défini suivant les figures 2 et 3 ;
- La figure 8 représente, dans une vue analogue à celle de la figure 1, en position fermée, un inverseur de poussée à portes écopes selon un autre mode de réalisation de l'invention ;
- La figure 9 représente le mode de réalisation décrit suivant la figure 8, en mode jet inversé ;
- La figure 10 et 11 représentent en perspective le concept défini suivant les figures 8 et 9 ;
- La figure 12 représente, dans une vue analogue à celle de la figure 1, en position fermée, un inverseur de poussée à portes écopes selon un autre mode de réalisation de l'invention ;
- La figure 13 représente le mode de réalisation décrit suivant la figure 12, en mode jet inversé ;
- Les figures 14 à 15 représentent en perspective le concept défini suivant les figures 12 et 13.

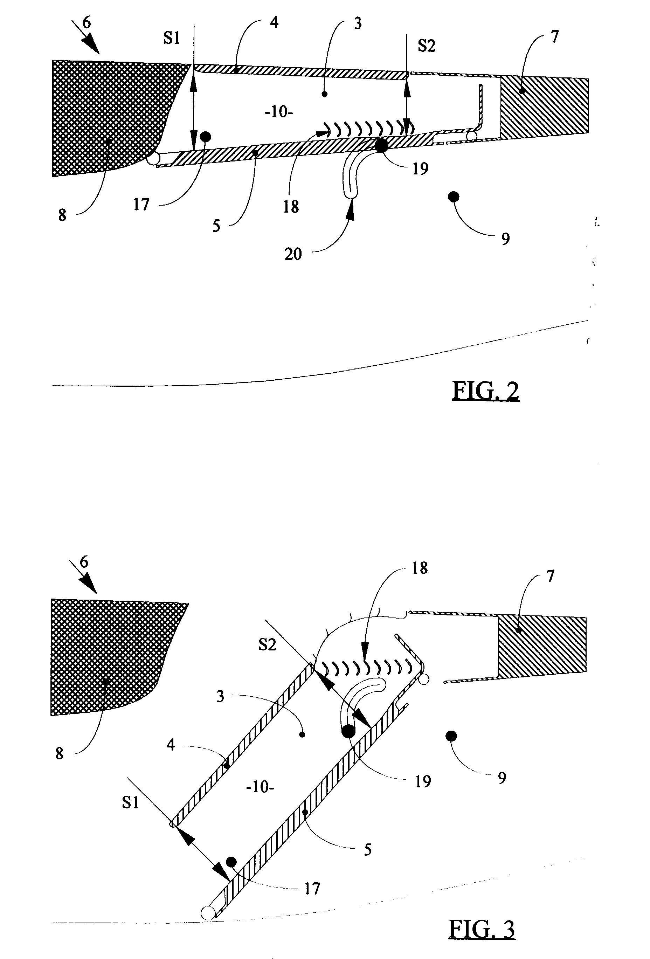

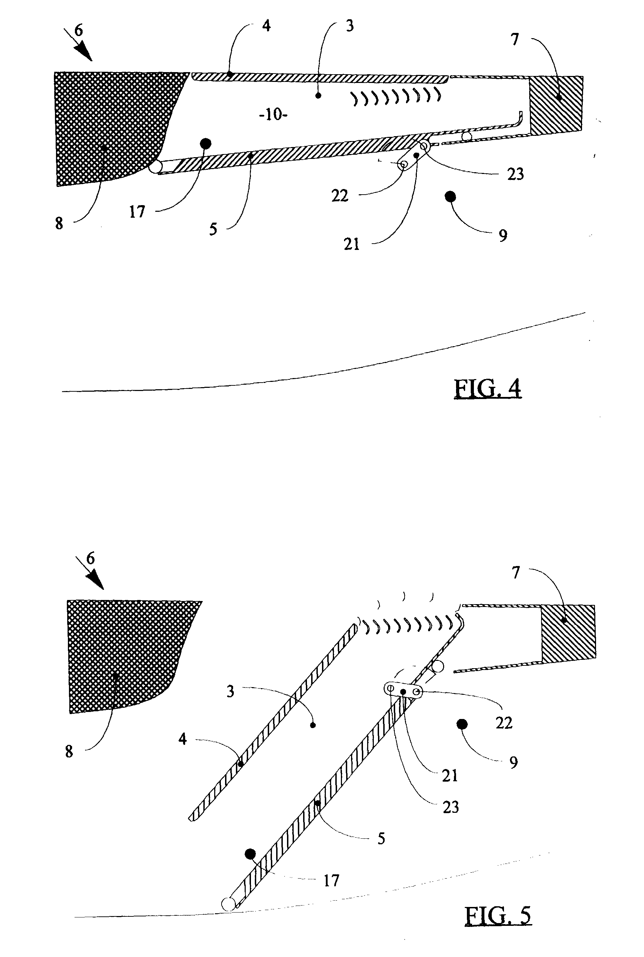

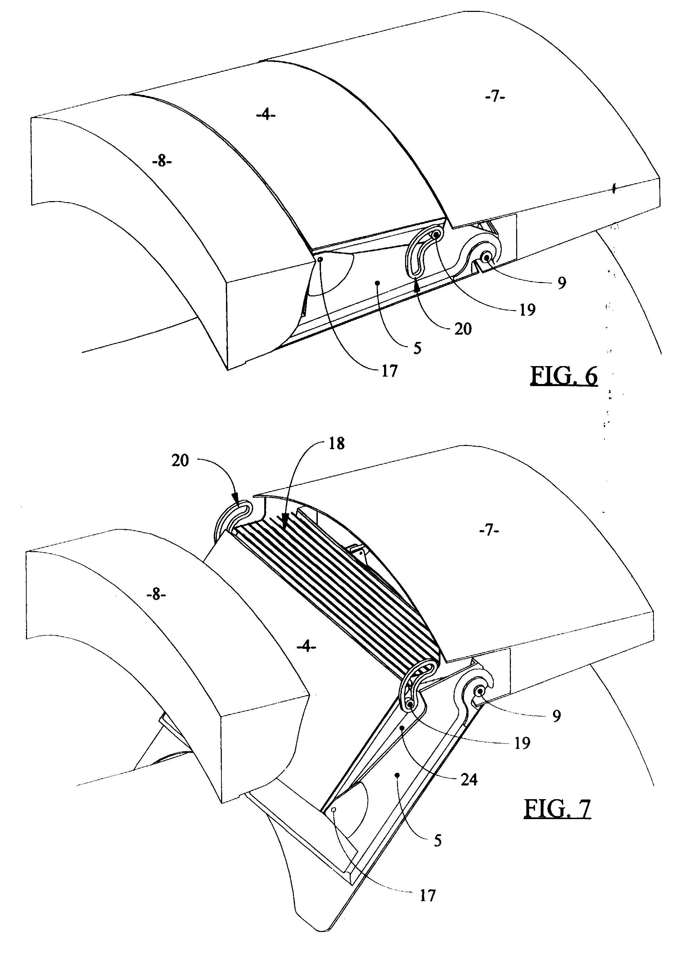

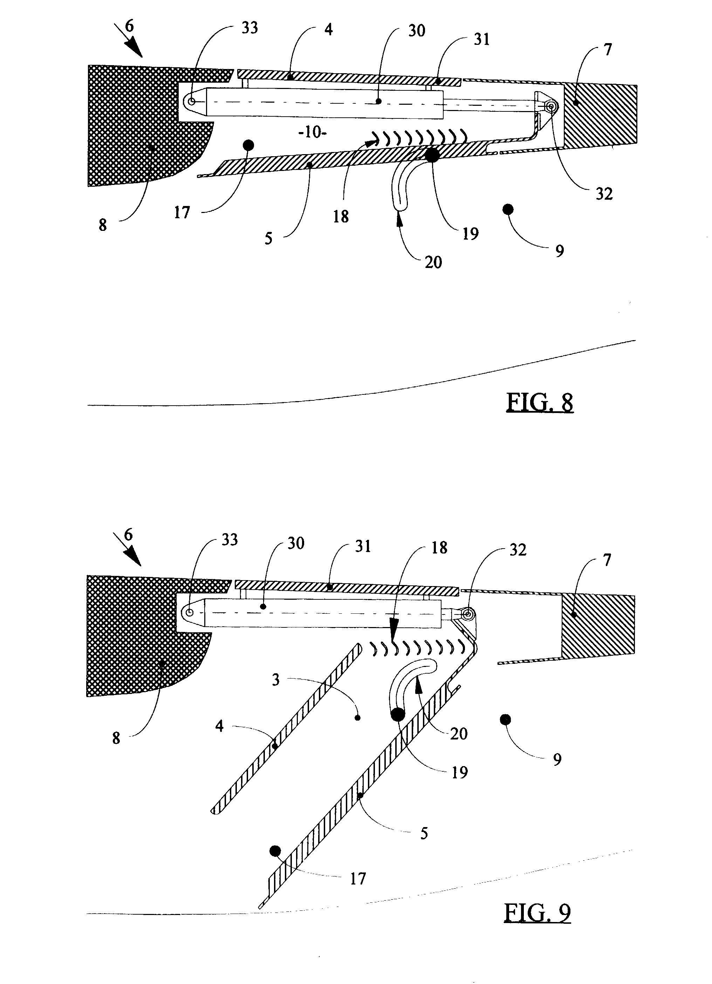

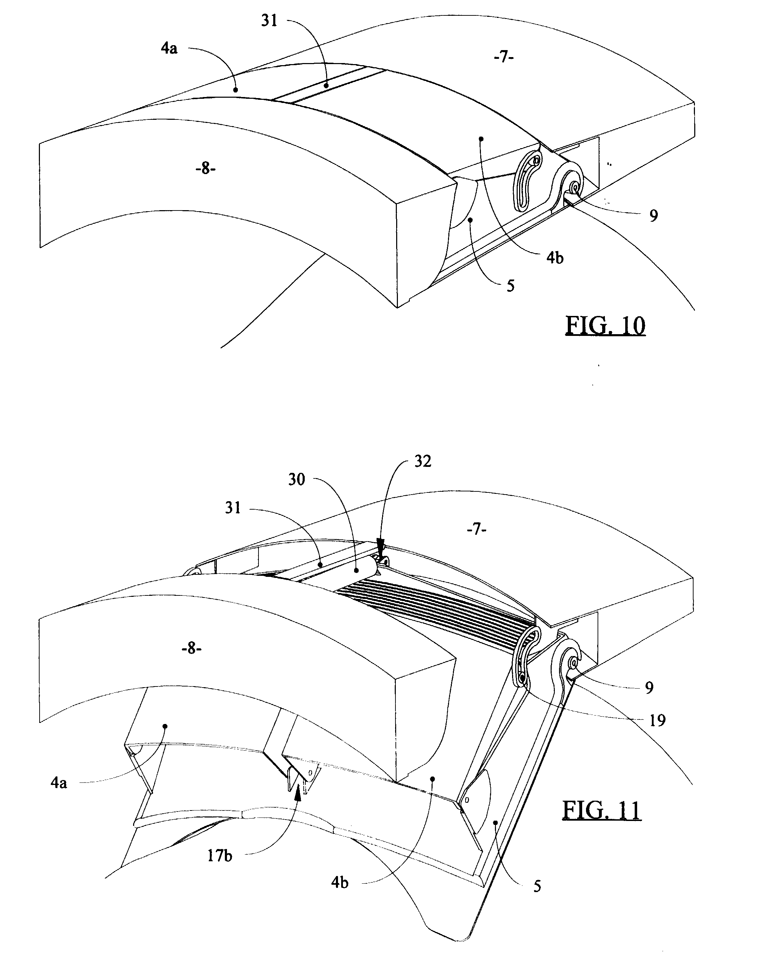

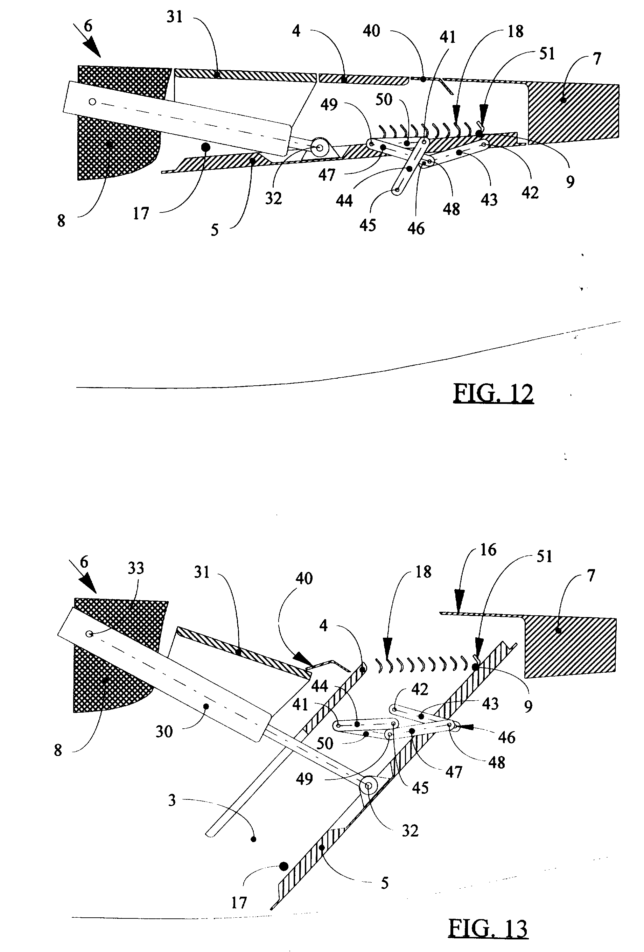

Les figures 2,3,6 et 7 représentent un mode de réalisation de l'invention. Une porte écope 3 formée d'une structure principale interne articulée autour d'un axe de rotation 9 porté par les poutres latérales de la structure fixe 6, entraîne et supporte une structure externe 4 articulée dans cette configuration autour d'un axe 17 porté par la structure principale interne 5 de la porte 3. Un recouvrement 24 permettant de boucher les parois latérales de la structure de la porte 3 en jet inversé est appliqué sur l'une ou l'autre des structures.
Une grille d'aubes 18 est positionnée à l'intérieur de la structure de la nacelle externe, montée fixe sur la structure fixe aval 7 de l'inverseur. La disposition des aubes est telle qu'elle permette au flux passant par la section d'échappement augmentée "S2" du conduit interne 10 de la porte 3 d'être totalement guidé vers l'amont de la nacelle. La technologie de la grille 18 est définie et son installation sur la structure fixe est réalisée selon les règles connues de l'homme de métier.
Au moins un galet 19 appartenant à la structure externe 4 est monté en partie latérale vers l'aval et opposé à l'axe pivot 17 de ladite structure externe. Au moins une rampe de guidage 20 assujettie à la structure fixe de l'inverseur guide le galet 19 pendant la phase d'actionnement de la porte 3. La distance du pivot 9 de la porte 3 au galet 19 dans la rampe 20 en position jet direct est plus petite que la distance du même pivot 9 de la porte 3 au galet 19 dans la rampe 20 en position jet inversé. L'écart de ces deux valeurs permettant de réaliser la section d'échappement "S2" recherchée. Entre les deux positions extrêmes du galet 19 dans la rampe 20, la définition du chemin de guidage est déterminée pour permettre une cinématique adaptée de l'aval de la structure externe 4 par rapport aux aubes de la grille 18.
L'axe de rotation 17 de la structure externe peut être remplacé par un ensemble de bielles associées dont l'une relierait la structure interne 5 de la porte 3 à la structure externe 4 de la porte et la seconde liée à la structure fixe commanderait le déplacement de la première bielle, ceci dans

le but d'obtenir une section "S1" différente entre la position de la porte 3 en mode jet direct et jet inversé.
La structure externe mobile 4 peut aussi ne couvrir qu'une partie de la structure externe totale de la porte 3. Dans cette alternative l'axe pivot 17 se trouve déplacé vers l'aval de la structure interne 5, un recouvrement de la structure externe amont fixe avec la structure externe mobile 4 peut être appliqué pour réaliser la continuité aérodynamique des lignes de la nacelle.

Le concept de guidage par rampe 20 défini précédemment est avantageusement adapté pour une location de grille 18 basse c'est à dire se situant plus proche de l'interne de la structure interne 5 que la structure externe 4 de la porte. L'enveloppe de la rampe 20 peut être contenue dans les parois latérales de la structure fixe de l'inverseur.
Lorsque la grille 18 est positionnée haute c'est à dire proche de l'interne de la structure externe mobile 4, l'aval de ladite structure externe mobile doit avoir une cinématique suffisamment dégageante pour sauter l'obstacle de l'aube amont de la grille 18. La rampe de guidage 20 peut être inadaptée pour cette situation celle-ci devant se retrouver à l'extérieur des lignes de la nacelle.

Pour palier ce problème, les figures 4 et 5 représentent un exemple de réalisation d'un autre mode de l'invention. Au moins une bielle 21 est articulée sur la structure fixe 6 au point pivot 22. Préférentiellement le pivot 22 est situé au plus près des lignes extérieures et sur au moins une paroi latérale de la structure de l'inverseur.

La bielle 21 est reliée à la structure externe mobile 4 au point 23. Lors de la manoeuvre de la porte 3 le point pivot 23 peut alors sortir des lignes de la nacelle si nécessaire et permettre ainsi le dégagement suffisant de l'aval de la structure externe mobile 4 de la porte 3 autour de la grille 18.

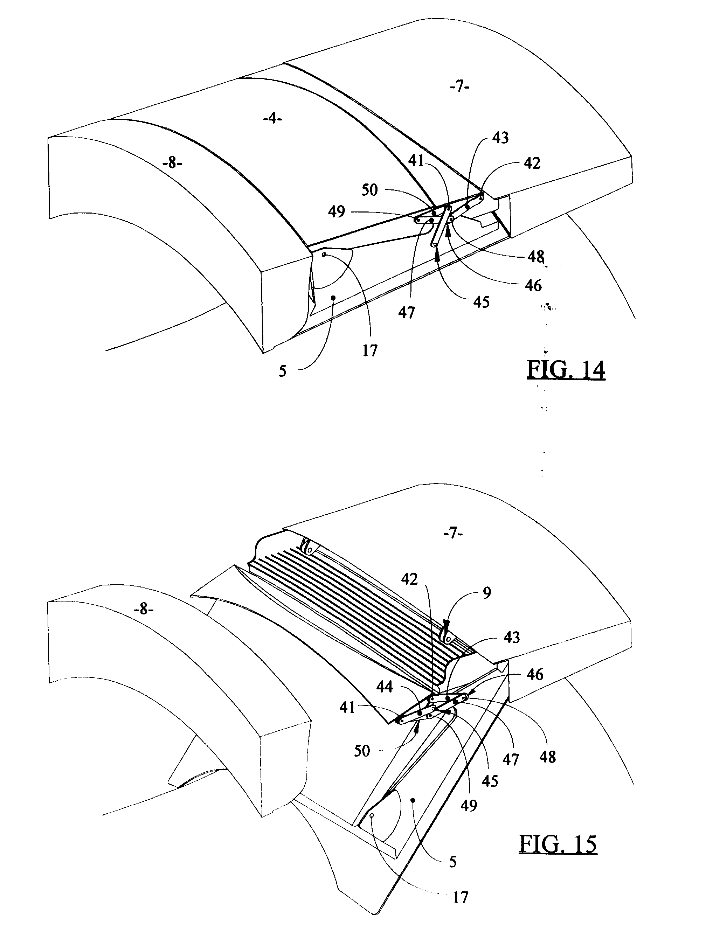

Les figures 8, 9 10 et 11 représentent un exemple de disposition d'entraînement aval de la porte par vérin amont. Comme représenté sur les figures, un vérin 30 fixé et articulé sur la structure fixe 6 en un point 33, entraîne en rotation la porte 3 autour de son pivot 9 par un point 32 positionné en aval de la structure de la porte 3.
Avantageusement lorsque le pivot 9 de porte est en position basse comme représenté sur les figures, le vérin 30 peut être positionné dans l'axe de la porte 3, ceci dans le but d'obtenir une distance entre le pivot 9 et le point de manoeuvre 32 de la porte le plus grand possible. La définition de la structure externe mobile 4 comporte une interruption structurale centrale pour permettre le logement du vérin 30. La structure externe mobile 4 peut être réalisée en deux demi-pièces indépendantes 4a et 4b, entraînées chacune soit par le principe déjà évoqué soit en jouant sur la rotation différentielle du vérin 30 et de la porte 3 entre les deux positions d'ouverture et de fermeture.
Un pivot intermédiaire 17b reprenant les parois internes latérales de la structure externe mobile 4 encadrant le vérin 30 sert à la fois de relais pivot et de renfort structural pour les demi-structures mobiles aussi bien qu'à la structure mobile monobloc.
Pour boucher la cavité créée par le logement du vérin 30 sur la surface externe de la nacelle, un carénage 31 est associé au corps du vérin. La face interne dudit carénage 31, peut avoir une forme aérodynamique d'aide à l'écoulement et au contournement du flux au plus près de sa définition géométrique fonctionnelle.

Les figures 12, 13, 14 et 15 représentent un mode de réalisation de l'invention permettant d'associer le concept d'augmentation de la section d'échappement "S2" à un positionnement de vérin amont 30 à entraînement lié à la structure interne 5 dont l'axe du vérin en position jet direct passe au dessous de l'axe pivot 9 de la porte 3. Pour remonter l'axe pivot 9 dans une direction centrifuge par rapport à l'axe de la nacelle, les ferrures pivots sont positionnées chacune entre l'axe central de la porte 3 et ses parois latérales respectives d'un mode de réalisation connu de l'homme de métier.
Le vérin 30 est positionné sur la structure fixe 6 articulé au point 33 sur le cadre avant 8. Le point d'accrochage 32 sur l'interne de la structure interne 5 est positionné entre l'amont de la structure interne et le pivot 9. Les deux points 32 et 33 sont positionnés de telle sorte qu'en jet direct l'axe passant par ces points se situe sous le pivot 9 de la porte 3.
L'application d'une technologie de porte écope à axe pivot 9 "relevé" réduit fortement le dégagement naturel des aubes aval de la grille 18 par rapport à la casquette 16 en jet inversé. Lorsque l'on associe la découpe utile de l'aval de la structure externe mobile 4 par rapport à la première aube de la grille 18 et la découpe de l'amont de la casquette 16 nécessaire au libre passage du flux sortant de la porte 3, en jet inversé, une cavité en jet direct subsiste entre ces deux détourages. L'utilisation d'une casquette aval 40 réalisant une partie des lignes externes de la nacelle comme définie dans la demande de brevet français 97.06943 permet de combler cette cavité. La cinématique d'entraînement par bielles données en exemple permet d'en associer la manoeuvre de la structure externe 4. La casquette comporte deux points d'entraînement et de guidage 41 et 42. Une bielle 43 relie le point 43 à la porte 3 au point 46 et une autre bielle 50 relie le point 41 à l'aval de la structure externe mobile 4 au point 49.
Pour réaliser le déplacement différentiel de la casquette 40 par rapport à la porte 3, une troisième bielle 44 liée à la bielle 50 au point 41 a un point d'articulation fixe 45 lié à la structure fixe 6.
Pour créer la rotation relative de la structure externe mobile 4, une quatrième bielle 47 est installée articulée sur la bielle 43 en un point intermédiaire 48 entre les deux points 42 et 46 de cette bielle. La bielle 47 est raccordée au point 49 à la structure externe mobile 4. La distance définie entre le point 46 et le pivot 48 de la bielle 47 permet grâce à l'angle formé entre la position jet direct et jet inversé d'assurer une augmentation de la section d'échappement "S2". Pour aider et assurer un bon positionnement de la structure interne 5 par rapport à la grille, la surface interne de la structure interne 5 peut être continue et venir au contact d'une aube 51 réalisant la surface interne habituelle de la porte 3.

Le positionnement du vérin 30 dans cette configuration créée une cavité locale sur la surface externe de la nacelle. Un carénage 31 reprenant une partie des lignes externes de la nacelle comble cette cavité.
Comme sur les figures 8 à 11 le carénage 31 peut être fixé sur le vérin 30. Il peut être associé à la structure amont fixe et être en porte à faux. Il peut être aussi relié et articulé sur l'amont de la structure externe mobile 4, l'amont du carénage 31 pouvant être guidé sur le corps du vérin 30.
Selon une variante de réalisation, la grille d'aubes 18 au lieu d'être fixe est montée solidaire à la porte 3.
Soit toute la grille 18 est montée à l'une des structures 4 ou 5 de la porte 3, soit chaque structure 4 et 5 de la porte 3 supportent une partie de la grille 18 et se déplace lors de l'ouverture pour coopérer entre elles tout en respectant la cinématique d'ouverture.

## Revendications

1. Inverseur de poussée de turboréacteur à double flux comportant des portes creuses pivotantes (3), constituant en position fermée, lors d'un fonctionnement en jet direct, une partie du capotage extérieur de la nacelle et après pivotement autour d'un axe de rotation (9) disposé à son aval et porté par la structure fixe d'inverseur et sous l'action d'un moyen de commande des déplacements, le bord amont de porte pénétrant dans le flux, les portes (3) constituant des obstacles de déviation du flux en dégageant un passage dans le capotage extérieur, lors d'un fonctionnement en inversion de poussée, au moins une partie du flux dévié empruntant le conduit interne (10) de la porte (3) formant écope caractérisé en ce que au moins une partie aval de la structure externe (4) de la porte (3), qui forme ledit conduit interne (10) de guidage du flux au travers de la porte (3), est indépendante et mobile par rapport à la structure interne (5) de la porte (3), de manière que la section aval S2 de sortie efficace d'échappement du conduit interne (10) de porte soit d'une part, en position de jet direct, inférieure à la section amont S1 d'entrée du conduit interne (10) de porte, correspondant au resserrement des lignes externes de nacelle vers l'aval et, d'autre part, en position de jet inversé après augmentation, au moins égale à la section d'entrée S1, ladite partie mobile de structure externe (4) de porte étant entraînée dans une direction centrifuge par rapport à la structure interne (5) de porte au moyen d'un système d'entraînement mécanique.

2. Inverseur de poussée de turboréacteur à double flux selon la revendication 1 caractérisé en ce que la structure interne (5) de porte est articulée autour du pivot (9) de porte sur la structure fixe et supporte la structure externe mobile (4) articulée en amont autour d'un axe pivot (17) et portant au moins un galet (19) se déplaçant dans une rampe (20) portée par la structure fixe d'inverseur.

3. Inverseur de poussée de turboréacteur à double flux selon la revendication 1 caractérisé en ce que la structure interne (5) de porte est articulée autour du pivot (9) de porte sur la structure fixe et supporte la structure externe mobile (4) articulée en amont autour d'un axe pivot (17) et relié par au moins une bielle (21) à la structure fixe d'inverseur.

4. Inverseur de poussée de turboréacteur à double flux selon la revendication 1 caractérisé en ce que la structure externe (4) de porte est articulée autour du pivot (9) de porte sur la structure fixe et supporte la structure interne mobile (5) articulée en amont autour d'un axe pivot (17).

5. Inverseur de poussée de turboréacteur à double flux selon l'une quelconque des revendications 1 à 4 caractérisé en ce qu'une grille d'aubes (18) fixe, supportée par la structure fixe d'inverseur et disposée à l'intérieur de la nacelle recouvre en position de jet inversé la section de sortie du conduit interne (10) de la porte (3).

6. Inverseur de poussée de turboréacteur à double flux selon l'une quelconque des revendications 1 à 5 caractérisé en ce que la structure externe mobile de porte comprend deux parties indépendantes (4a, 4b) de part et d'autre d'un vérin central (30) et est articulée autour d'un axe pivot (17) porté par la structure interne (5) de porte.

7. Inverseur de poussée de turboréacteur à double flux selon la revendication 1 caractérisé en ce que la structure interne (5) de porte est articulée autour du pivot (9) de porte sur la structure fixe et supporte la structure externe mobile (4) articulée en amont autour d'un axe pivot (17), le vérin (30) d'entraînement de porte est relié à la structure interne (5) de manière que l'axe géométrique du vérin en jet direct passe au-dessous du pivot (9) de porte, une casquette aval (40) réalisant une partie des lignes externes de nacelle en jet direct est disposée entre la structure externe (4) de porte et la structure fixe aval (7), la casquette aval (40) est reliée à la porte (3) par une première (43) et une seconde (50) bielles, une troisième bielle (44) relie la seconde bielle (50) à la structure fixe d'inverseur et une quatrième bielle (47) relie la seconde bielle (50) à un point intermédiaire (48) de la première bielle (43).

8. Inverseur de poussée de turboréacteur à double flux selon la revendication 5 caractérisé en ce que l'aube (51) d'extrémité aval de la grille (18) est structurale et est en contact étanche avec la surface interne de la structure interne (5) de la porte (3).

9. Inverseur de poussée de turboréacteur à double flux selon l'une quelconque des revendications 1 à 4 caractérisé en ce qu'une grille d'aubes (18) est montée solidaire à la porte (3).
